# EUROPÄISCHE PATENTSCHRIFT

(11) **EP 3 788 450 B1**
(45) Veröffentlichungstag und Bekanntmachung des Hinweises auf die Patenterteilung: **27.05.2026**
(21) Anmeldenummer: 19721578.3
(22) Anmeldetag: 26.04.2019
(51) Int. Cl.: G05B 19/042, B25J 9/16

(54) **AUTOMATISIERUNGSANLAGE UND MODELLIERUNGSVERFAHREN**
AUTOMATION SYSTEM AND MODELLING METHOD
INSTALLATION D'AUTOMATISATION ET PROCÉDÉ DE MODÉLISATION

(30) Priorität: 02.05.2018 DE 102018206713
(43) Veröffentlichungstag der Anmeldung: 10.03.2021
(73) Patentinhaber: KUKA Deutschland GmbH, 86165 Augsburg (DE)
(72) Erfinder: KOGAN, Yevgen, 86152 Augsburg (DE)
(74) Vertreter: Schlotter, Alexander Carolus Paul
(86) Internationale Anmeldenummer: PCT/EP2019/060743
(87) Internationale Veröffentlichungsnummer: WO 2019/211188

(56) Entgegenhaltungen:
- NEIL T DANTAM ET AL: "An incremental constraint-based framework for task and motion planning", INTERNATIONAL JOURNAL OF ROBOTICS RESEARCH., vol. 37, no. 10, 27 March 2018 (2018-03-27), US, pages 1134 - 1151, XP055606548, ISSN: 0278-3649, DOI: 10.1177/0278364918761570
- "Virtual and Augmented Reality Applications in Manufacturing", 1 January 2004, SPRINGER LONDON, London, ISBN: 978-1-4471-3873-0, article AMARNATH BANERJEE ET AL: "A Decision Support System for Integrating Real-time Manufacturing Control with a Virtual Environment", pages: 83 - 95, XP055606556, DOI: 10.1007/978-1-4471-3873-0_5
- SEBASTIAN BLUMENTHAL ET AL: "Towards a Domain Specific Language for a Scene Graph based Robotic World Model", 1 August 2014 (2014-08-01), XP055606562, Retrieved from the Internet <URL:https://arxiv.org/pdf/1408.0200.pdf>
- BLUMENTHAL SEBASTIAN ET AL: "A scene graph based shared 3D world model for robotic applications", 2013 IEEE INTERNATIONAL CONFERENCE ON ROBOTICS AND AUTOMATION (ICRA); 6-10 MAY 2013; KARLSRUHE, GERMANY, IEEE, US, 6 May 2013 (2013-05-06), pages 453 - 460, XP032506252, ISSN: 1050-4729, ISBN: 978-1-4673-5641-1, [retrieved on 20131013], DOI: 10.1109/ICRA.2013.6630614

## Beschreibung

Die vorliegende Erfindung betrifft ein computerimplementiertes Verfahren zum Programmieren und/oder Steuern einer Automatisierungsanlage basierend auf einem Aktualisieren eines Modells einer Umwelt der Automatisierungsanlage sowie ein Computerprogrammprodukt zur Durchführung des Verfahrens und ein zugehöriges System.

Unter den Begriff "Automatisierungsanlage" fallen im Sinne der vorliegenden Erfindung insbesondere Anlagen, die mindestens einen Roboter, ein Förderband, eine mobile Plattform oder ähnliches aufweisen. Zur Vereinfachung werden Ausführungsbeispiele der vorliegenden Erfindung und der Stand der Technik anhand einer Automatisierungsanlage, die mindestens einen Roboter aufweist, beschrieben. Der Umfang der Erfindung ist aber nicht in dieser Hinsicht beschränkt.

Aus dem Stand der Technik ist es bekannt, zur Vorgabe von Zielpositionen in Roboteranwendungen Basis-Koordinatensysteme mit (gegebenenfalls indirektem) Bezug zum Roboterfuß und Programmpunkte mit Bezug zu den Basis-Koordinatensystemen zu verwenden. Dieses Vorgehen stößt beispielsweise dann an seine Grenzen, wenn zusätzlich zu reinen Zielpositionen die Geometrie der Umgebung des Roboters berücksichtigt werden soll, beispielsweise bei der kollisionsfreien Bahnplanung. Aus diesem Grund kommen vermehrt Umweltmodelle bei der Ausführung von Roboterapplikationen zum Einsatz. Nach bereits bekannten Ansätzen werden die bei der Ausführung der Applikationen verursachten Veränderungen der Umwelt durch entsprechende Anweisungen an geeigneten/relevanten Stellen im Programm ins Umweltmodell übertragen. Der Erfinder der vorliegenden Erfindung hat erkannt, dass dieser Ansatz insbesondere bei größeren Änderungen umständlich zu programmieren ist. Weiterhin hat der Erfinder erkannt, dass solche Änderungen erst zur Laufzeit des Programms dargestellt werden können, d.h. während der Programmierung ist es nicht möglich, den durch entsprechende Anweisungen im Programm beschriebenen Zustand zu visualisieren bzw. auszuwerten oder zu nutzen. Weiter hat der Erfinder erkannt, dass die bisherigen Ansätze zu einem unnötig erhöhten Ablaufumfang des Programms führen können, dass das Programm unübersichtlicher werden kann und dass es zu einer erhöhten Fehleranfälligkeit führen kann. So hat der Erfinder erkannt, dass die Wahrscheinlichkeit erhöht wird, dass es bei einer Umstrukturierung des Programms, die beispielsweise das Verschieben von Bewegungsbefehlen beinhaltet, vergessen werden kann, die eigentlich dazugehörigen Anweisungen zum Verändern der Umgebung anzupassen (z.B. parallel zu den Bewegungsbefehlen an eine andere Stelle im Programm zu verschieben).

Ferner ist Neil T Dantam et Al: "An incremental constraint-based framework for task and motion planning; INTERNATIONAL JOURNAL OF ROBOTICS RESEARCH., Bd. 37, Nr. 10, 27. März 2018 (2018-03-27), Seiten 1134-1151, XP0556065 ISSN: 0278-3649, DOI: 10.1177/0278364918761570 bekannt, das "task and motion planning" (TMP) für einen autonomen Roboter betrifft.

Weiterhin ist Amarnath Banerjee ET AL: "A Decision Support System for integrating real-time manufacturing control with a virtual environment ;In: "Virtual and Augmented Reality Applications in Manufacturing", ISBN: 978-1-4471-3873-0; Seiten 83-95, DOI: 10.1007/978-1-4471-3873-0_5, bekannt, das ein Petri-Netz basiertes Modell betrifft zur Steurung eines Herstellungsprozesses betrifft.

Weiterhin ist Blumenthal Sebastian; Bruyninckx Herman; Nowak Walter; Prassler Erwin: 'ISBN 978-1-4673-5641-1 ; ISBN 1-4673-5641-7, Seiten 453- 460, 2013-05 bekannt, das ein auf Szenegraphen basierendes 3D-Weltmodell betrifft.

Aufgabe der vorliegenden Erfindung ist es, Aspekte der Modellierung einer Umwelt einer Automatisierungsanlage zu verbessern.

Diese Aufgabe wird durch ein computerimplementiertes Verfahren mit den Merkmalen des Anspruchs 1 gelöst. Ansprüche 10 und 11 stellen ein Computerprogrammprodukt bzw. ein System zur Durchführung eines hier beschriebenen Verfahrens unter Schutz. Die Unteransprüche betreffen vorteilhafte Weiterbildungen.

Im Folgenden wird der Begriff "Entität" benutzt. Je nach Kontext kann sich dieser Begriff auf die physikalische Welt beziehen und/oder auf ein Modell. Unter einer Entität kann also beispielsweise ein Objekt oder eine Sache in der physikalischen Welt verstanden werden, insbesondere auch eine Automatisierungsanlage oder ein Teil einer Automatisierungsanlage, wie z.B. ein Greifer. Unter einer Entität kann aber stattdessen/zusätzlich auch eine Modellierung einer solchen physikalischen Entität verstanden werden, insbesondere eine Abbildung, insbesondere eine 3D-Abbildung einer solchen physikalischen Entität. Der Fachmann wird jeweils dem Zusammenhang entnehmen, in welcher Weise der Begriff "Entität" im Folgenden zu verstehen ist.

Eine Ausführung der vorliegenden Erfindung betrifft ein computerimplementiertes Verfahren zum Programmieren und/oder Steuern einer Automatisierungsanlage basierend auf einem Aktualisieren eines Modells einer Umwelt der Automatisierungsanlage, nach Anspruch 1

Hierdurch kann ein Aktualisieren des Umweltmodells auf relativ übersichtliche Weise erfolgen. Zudem kann die Programmierung der Automatisierungsanlage vereinfacht werden, insbesondere auch bei einer Anpassung bzw. Veränderung des Programms. Außerdem kann die Datenhaltung kompakter werden als es zumindest nach manchen bisher bekannten Ansätzen der Fall ist. Da das Verfahren computerimplementiert ist und zur Durchführung des Verfahrens Zustände der Entitäten bekannt sein müssen, wird das Verfahren zweckmäßigerweise auf einem Computer oder einer übergeordneten Steuerung ausgeführt, welche mit den Steuerungen der Entitäten Daten über Zustände austauschen kann oder bevorzugt wird das Verfahren auf einer Steuerung zumindest einer der Entitäten ausgeführt. Nach einer Ausführung weist zumindest eine Aktion einen Bewegungsablauf, ein Greifen oder ein Loslassen (eines Gegenstands) oder ein sonstiges Aktivieren einer der Entitäten auf. Dabei ist zu beachten, dass eine Aktion nicht notwendigerweise eine (insbesondere sichtbare oder spürbare) Bewegung sein muss, sondern auch beispielsweise das Einschalten oder Verändern eines elektrischen Stroms, beispielsweise um einen Elektromagneten zu aktivieren, aufweisen kann. Des Weiteren ist es nach manchen Anwendungsbeispielen möglich, dass aus einer (programmierten) Aktion alleine nicht immer die entsprechende Veränderung im Umweltmodell abgeleitet werden kann. Beispielsweise kann der Befehl "out[1]=1" bedeuten, dass ein Greifer geöffnet wird, was wiederum in vielen Fällen bedeutet, dass ein Werkstück abgelegt wird. Letzteres ist aber nicht notwendigerweise der Fall - insbesondere, wenn sich zum Zeitpunkt des Öffnens des Greifers kein Werkstück in dem Greifer befand. Aus dem Befehl "out[1]=1" alleine kann also nicht (automatisch/notwendigerweise) abgeleitet werden, dass ein Werkstück abgelegt wird. Das Ausführen der Aktion kann durch die übergeordnete Steuerung oder eine Steuerung einer der Entitäten initiiert bzw. gesteuert bzw. geregelt werden und kann bevorzugt auch das Übertragen bzw. Übermitteln eines Signals bzw. eines Zustands von der Entität an die (übergeordnete) Steuerung umfassen. Das Modell bzw. die Daten des Modells können in der (übergeordneten) Steuerung in einem flüchtigen oder nicht flüchtigen Speicher gespeichert sein. Änderungen des Modells bzw. die Zustände können durch dadurch in dem Speicher gespeichert sein, dass lediglich das aktualisierte Modell gespeichert wird oder auch die Historie der Änderungen gespeichert werden. Insbesondere kann durch einen Prozessor bzw. eine CPU der (übergeordneten) Steuerung bei Erhalt eines Signals von einer Entität bzw. bei der Detektion bzw. dem Auftreten einer Zustandsänderung einer Entität ein aktualisiertes Umweltmodell berechnet und im Speicher abgespeichert werden.

Eine oben erwähnte Vater-Kind-Beziehung kann insbesondere Informationen zur wenigstens näherungsweisen Position von einer Kind-Entität in Bezug auf dessen Vater-Entität aufweisen.

An dieser Stelle macht es Sinn zu illustrieren, was unter den Begriffen "Vater-Kind-Beziehung", "Kind-Entität" und "Vater-Entität" verstanden werden kann und wie diese Begriffe im Zusammenhang mit einem beispielhaften Umweltmodell stehen.

Als Umweltmodell kann beispielsweise eine baumartige Datenstruktur verstanden werden, in der Knoten über (gerichtete) Kanten verbunden sein können und alle Knoten bis auf einen einen Vater haben. Jeder Vater(-Knoten) kann ein(en) oder mehrere Kinder(-Knoten) haben. Wie bei einem Baum die Blätter an den Zweigen hängen, die Zweige an dem Stamm wachsen und der Stamm durch die Wurzel mit der Erde verbunden ist, ist jedes Kind in dem Modell von seinem Vater abhängig. Dieser Vater stellt wiederum das Kind seines Vaters dar usw. Der eine Knoten, der keinen Vater hat, ist die Wurzel des Baumes bzw. die Welt. Gemäß der vorliegenden Erfindung kann man nun die verschiedenen Entitäten an den Knoten des Modells ansiedeln. Das heißt, eine Entität (beispielsweise ein Roboterarm) entspricht einem ersten Knoten; ein Greifer, der am Ende des Roboterarms befestigt ist, entspricht einem zweiten Knoten; und ein Gegenstand, der von dem Greifer gehalten wird, entspricht einem dritten Knoten. In diesem Szenario wäre der Gegenstand das Kind des Greifers, der Greifer wiederum das Kind des Roboterarms. Der Gegenstand in diesem Beispiel wäre also eine Kind-Entität in Bezug auf die Vater-Entität "Greifer" usw.

Solange der Gegenstand von dem Greifer gehalten wird, lässt sich die Position des Gegenstandes zumindest näherungsweise von der Position des Greifers ableiten, indem beispielsweise der räumliche Bezug als Eigenschaft der jeweiligen Vater-Kind Beziehung im Modell gespeichert wird. Unter Umständen hängt die Position des Gegenstandes auch von der Orientierung des Greifers ab. Zur besseren Übersichtlichkeit wird aber in der vorliegenden Anmeldung darauf verzichtet, auf die Abhängigkeit der Position eines Kindes von der Orientierung seines Vaters näher einzugehen. Der hier verwendete Begriff "Position" soll aber so verstanden werden, dass gegebenenfalls auch bzw. stattdessen die Orientierung einer Entität mit zu berücksichtigen ist.

Das Verfahren gemäß dem obigen Aspekt der Erfindung kann bereits während des Programmierens der Automatisierungsanlage ausgeführt werden. Dies hat den Vorteil, dass ein Programmierer schon während des Programmierens einen Überblick über die Umwelt der Automatisierungsanlage erhalten kann. Dies kann wiederum zur Minimierung von Fehlern bei der Programmierung benutzt werden.

Andererseits kann das obige Verfahren auch während einer Laufzeit der Automatisierungsanlage ausgeführt werden. Dies kann beispielsweise dazu benutzt werden, den tatsächlichen Zustand der Automatisierungsanlage bzw. ihrer Umwelt mit dem Modell zu vergleichen.

Erfindungsgemäß wird zumindest manchen Aktionen, insbesondere jeder Aktion jeweils mindestens ein dritter und ein vierter Satz, insbesondere genau ein dritter und ein vierter Satz von Vater-Kind-Beziehungen, zugeordnet, wobei der dritte Satz von Vater-Kind-Beziehungen Anforderungen definiert, denen das Modell der Umwelt und/oder die Umwelt genügen muss, damit die Aktion (korrekt) durchgeführt werden kann, und wobei der vierte Satz von Vater-Kind-Beziehungen einen Zustand von zumindest einem Teil der Umwelt nach Durchführen der Aktion definiert. Auf diesem Wege kann festgelegt werden, welchen Anforderungen die Umwelt der Automatisierungsanlage genügen muss, damit ein erfolgreiches Durchführen der Aktion überhaupt möglich ist.

Zu diesem Zweck kann vor dem Aktualisieren des Modells überprüft werden, ob der Zustand des Modells dem dritten Satz von Vater-Kind-Beziehungen genügt. Der vierte Satz von Vater-Kind-Beziehungen kann dann auf das Modell (insbesondere nach der erfolgreichen Ausführung der Aktion) angewendet werden (d.h. insbesondere wird das Modell anhand des vierten Satzes von Vater-Kind-Beziehungen aktualisiert), wenn das Überprüfen ergibt, dass der Zustand des Modells dem dritten Satz von Vater-Kind-Beziehungen genügt. Anderenfalls könnte beispielsweise eine Fehlermeldung ausgegeben werden und/oder das Aktualisieren des Modells anhand des vierten Satzes von Vater-Kind-Beziehungen verhindert werden. Dies kann wiederum eine fehlerfreie Programmierung unterstützen. In diesem Zusammenhang sei angemerkt, dass sich der Begriff "Aktion" in der vorliegenden Anmeldung auf eine Aktion in der physikalischen Welt beziehen kann, und/oder auf einen Befehl (wie z.B. "Greifer auf") zur Ausführung einer solchen Aktion in der physikalischen Welt. Der Fachmann wird jeweils dem Zusammenhang entnehmen, in welcher Weise der Begriff "Aktion" im Folgenden zu verstehen ist.

Nach einer Ausführung kann mit Hilfe von Sensorik überprüft werden, ob der physikalische Zustand der Automatisierungsanlage und/oder der Umwelt dem vierten Satz von Vater-Kind-Beziehungen entspricht. Dies würde sinnvollerweise dann stattfinden, nachdem eine Aktion tatsächlich ausgeführt wurde, sich also der physikalische Zustand (also nicht nur im Modell) verändert hat. Auch dies kann beispielsweise der Fehlersuche dienen.

Nach einer Ausführung kann das Verfahren ein "Verriegeln" der durch den dritten Satz vorgegebenen Vater-Kind-Beziehungen aufweisen. Unter einem solchen "Verriegeln" wird vorzugsweise verstanden, dass die durch den dritten Satz vorgegebenen Vater-Kind-Beziehungen während des Ausführens der Aktion gelten müssen, weil sonst unter Umständen das korrekte Ausführen der Aktion nicht möglich ist.

Nach einer Ausführung findet das Umweltmodell insbesondere dann Anwendung, wenn es wenigstens eine weitere Automatisierungsanlage aufweist. Gemäß einer Ausführung können die Automatisierungsanlage und die wenigstens eine weitere Automatisierungsanlage zumindest teilweise unabhängig voneinander, insbesondere im Wesentlichen unabhängig voneinander betrieben werden. So kann das Modell beispielsweise auf zwei Roboter angewendet werden, deren Arbeitsbereiche sich zwar überlappen können, die aber im Prinzip unabhängig voneinander programmiert werden können.

In vielen Fällen wird gemäß dem hier beschriebenen Verfahren eine Aktion (in der physikalischen Welt) infolge eines Befehls an die Automatisierungsanlage ausgeführt. Durch das oben erwähnte Verriegeln kann sichergestellt werden, dass die wenigstens eine weitere Automatisierungsanlage die durch den dritten Satz von Vater-Kind-Beziehungen vorgegebenen Vater-Kind-Beziehungen (bzw. Aspekte der physikalischen Welt, auf die sich die vorgegebenen Vater-Kind-Beziehungen beziehen) während des Ausführens eines Befehls durch die (erste) Automatisierungsanlage nicht ändern kann. So kann verhindert werden, dass sich die Automatisierungsanlagen gegenseitig stören (beispielsweise indem die weitere Automatisierungsanlage einen Gegenstand (weg)bewegt, der von der (ersten) Automatisierungsanlage bearbeitet werden soll und sich deshalb - wie durch den dritten Satz von Vater-Kind-Beziehungen vorgegeben - an einer bestimmten Position aufhalten soll und dort verbleiben soll).

Nach einer Ausführung weist das Verfahren ein Visualisieren des Modells und/oder der Entitäten auf, insbesondere durch eine Baumstruktur und/oder eine Darstellung der Position der Entitäten, insbesondere eine räumliche Darstellung. Beispielsweise durch eine solche Baumstruktur kann ein Programmierer vorteilhafterweise einen Überblick über die Umwelt bzw. das Modell erhalten, insbesondere zu einem ausgewählten Zeitpunkt, weil das Modell gemäß der vorliegenden Erfindung aktualisiert wird. Ebenso kann der Programmierer den für die Ausführung einer Aktion benötigten (Teil-)Zustand sehen, indem er den dieser Aktion zugeordneten 3. Satz von Vater-Kind-Beziehungen betrachtet. Des Weiteren kann dieser 3. Satz für ein Engineering-Werkzeug verwendet werden, um beispielsweise die für ein Handverfahren des Roboters benötigten Lastdaten aus dem 3. Satz abzuleiten.

Ein Computerprogrammprodukt bzw. ein System zur Durchführung eines Verfahrens gemäß dem ersten Aspekt der Erfindung kann auch die oben beschriebenen optionalen Merkmale aufweisen. Um Wiederholungen zu vermeiden, werden diese nicht nochmal einzeln beschrieben.

Weitere Vorteile und Merkmale ergeben sich aus den Unteransprüchen und den Ausführungsbeispielen. Hierzu zeigt, zumindest teilweise schematisiert:
- Fig. 1: eine beispielhafte Darstellung einer Automatisierungsanlage und seiner Umwelt;
- Fig. 2: eine beispielhafte Baumstruktur als Veranschaulichung eines Modells in einem ersten Zustand;
- Fig. 3: die Baumstruktur der Fig. 2 in einem zweiten Zustand;
- Fig. 4: die Baumstruktur der Fig. 2 in einem dritten Zustand;
- Fig. 5: die Baumstruktur der Fig. 2 in einem vierten Zustand;
- Fig. 6: die Baumstruktur der Fig. 2 in einem fünften Zustand.

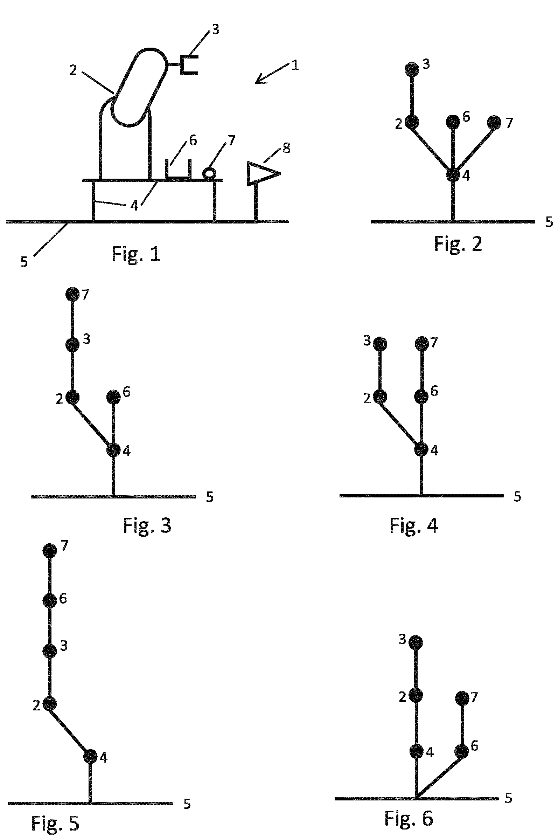

Fig. 1 zeigt eine Anordnung oder Szene 1 mit einer Automatisierungsanlage 2, in dem vorliegenden Beispiel ein in starker Vereinfachung dargestellter Roboter 2 mit einem Greifer 3. Auch dargestellt ist die Umwelt des Roboters 2 bzw. der Teil der Umwelt, der für den Roboter 2 relevant ist. In diesem Beispiel besteht die Umwelt des Roboters 2 aus einem Tisch 4, auf dem der Roboter 2 befestigt ist, dem Boden 5, auf dem der Tisch 4 steht, ein Behälter 6, der auch auf dem Tisch platziert ist, und ein Gegenstand 7, auch auf dem Tisch 4 liegend. Es wird auch ein Sensor 8 angedeutet, der aber nicht notwendigerweise Teil der für den Roboter relevanten Umwelt ist. Dieser Sensor 8 kann beispielsweise dazu benutzt werden, um festzustellen, ob sich der Gegenstand 7 an dem in Fig. 1 angedeuteten Ort aufhält.

Sensoren können auch an anderen Stellen verwendet werden, um die Position o.ä. anderer Entitäten (also z.B. des Greifers 3 oder des Behälters 6) zu überprüfen.

Im Beispiel der Fig. 1 kann der Roboter 2 mit seinem Greifer 3 den Gegenstand 7 greifen und z.B. in den Behälter 6 befördern.

Bevor die in den Figuren 2 bis 6 dargestellte Baumstruktur beschrieben wird, soll zunächst weiter erläutert werden, was unter einer "Vater-Kind-Beziehung" verstanden werden kann.

Der Erfinder hat erkannt, dass in den meisten Applikationen nur relativ wenige Zustände der Umwelt beschrieben werden müssen, um ausreichende Informationen über die Umwelt zu vermitteln. Dabei ist es oft auch ausreichend, sich auf Veränderungen von Vater-Kind-Beziehungen zwischen zwei Objekten zu beschränken. Solche Veränderungen werden als Zustandsveränderung betrachtet, während eine reine Positionsveränderung einer Entität (ohne Veränderung seiner Beziehung zu seinem Vater) nicht unbedingt als Zustandsveränderung betrachtet wird. Eine solche Positionsveränderung kann aber im Einzelfall im Sinne der vorliegenden Erfindung als Zustandsveränderung angesehen werden, nämlich insbesondere dann, wenn die Positionsveränderung für die Durchführung von Aktionen relevant ist. Außerdem gilt: die relative Veränderung der Lage eines Kindes bezüglich seines Vaters kann, muss aber nicht als Zustandsänderung betrachtet werden. Wird also bei der Beschreibung eines Zustandes die relative Lage weggelassen, umfasst der Zustand alle möglichen relativen Stellungen zwischen Vater und Kind.

Im Sinne der Erfindung kann eine Automatisierungsanlage und ihre Umwelt durch einen Satz von Vater-Kind-Beziehungen beschrieben oder definiert werden, wobei jede Vater-Kind-Beziehung bzw. der Satz von Vater-Kind-Beziehungen dreierlei Charakter haben kann bzw. - je nach Anwendung - auf drei verschiedene Weisen verstanden werden kann: Erstens kann eine Vater-Kind-Beziehung bzw. ein Satz einen tatsächlichen Zustand beschreiben (beispielsweise: "Der Gegenstand ist in dem Behälter."). Zweitens kann eine Vater-Kind-Beziehung bzw. ein solcher Satz eine Anforderung definieren (zum Beispiel: "Der Gegenstand soll sich in dem Behälter befinden."). Drittens kann eine Vater-Kind-Beziehung bzw. ein solcher Satz eine Veränderung definieren, insbesondere durch Bezug auf eine andere Vater-Kind-Beziehung bzw. einen anderen solchen Satz (beispielsweise: "Bisher war der Gegenstand neben dem Behälter auf dem Tisch; jetzt ist der Gegenstand aber in dem Behälter, also hat sich der Gegenstand in den Behälter bewegt.").

Fig. 2 zeigt eine Baumstruktur, mit der die in Fig. 1 gezeigte Szene modelliert werden kann. Wie in Fig. 2 gezeigt, befindet sich an der Wurzel des Baumes der Boden 5, weil sich dieser bei den nachfolgend beschriebenen Abläufen nicht verändert. Weil der Tisch 4 auf dem Boden 5 steht, ist der Tisch 4 als Kind dargestellt, das heißt es besteht eine Vater(Boden)-Kind(Tisch)-Beziehung. Auf dem Tisch befinden sich ein Roboter 2, ein Behälter 6 und ein Gegenstand 7. Entsprechend sind diese als Kinder des Tisches 4 dargestellt. An einem Arm des Roboters 2 ist ein Greifer 3 angeordnet und entsprechend ist der Greifer 3 als Kind des Roboters 2 dargestellt. Weil der Greifer 3 im gezeigten Zustand nichts greift und weil der Behälter 6 leer ist und weil sich nichts auf, an oder in dem Gegenstand 7 befindet, haben diese drei Entitäten keine Kinder.

Ein Satz an Vater-Kind-Beziehungen, der die in Fig. 1 dargestellte Szene ausreichend beschreibt, wäre beispielsweise:

| Vater-Kind-Beziehung | Bedeutung |
|---|---|
| Boden<-Tisch | Der Tisch steht auf dem Boden |
| Tisch<-Roboter | Der Roboter steht auf dem Tisch oder ist an dem Tisch befestigt |
| Roboter<-Greifer | Der Greifer ist an dem Roboter montiert |
| Tisch<-Behälter | Der Behälter steht auf dem Tisch |
| Tisch<-Gegenstand | Der Gegenstand steht/liegt auf dem Tisch |

Wahlweise (insbesondere, falls relevant) können eine oder mehrere der obigen Vater-Kind-Beziehungen auch einen Hinweis auf die Position einer der Entitäten enthalten, beispielsweise die (genaue) Position des Gegenstands 7 auf dem Tisch 4 (unter Zuhilfenahme eines Koordinatensystems). Im Sinne der vorliegenden Erfindung ist das Format der Vater-Kind-Beziehungen ausreichend flexibel, so dass solche Zusatzinformationen angegeben werden können, aber nicht angegeben werden müssen.

Zu dem obigen Beispiel ist noch anzumerken, dass der Roboter in Wirklichkeit mehrere bewegliche Teile haben kann (Schwinge, Arm usw.), die jeweils als Vater- bzw. Kind-Entitäten modelliert werden können. Zur Vereinfachung wird dies hier nicht explizit beschrieben.

Wie anhand der Figuren 2 bis 6 dargestellt, könnte eine Programmierung des Roboters folgende Befehle enthalten:
1. Der Greifer 3 soll den Gegenstand 7 greifen.
2. Der Greifer 3 soll den Gegenstand 7 in den Behälter 6 legen.
3. Der Greifer 3 soll den Behälter 6 greifen.
4. Der Roboter 2 soll den Behälter 6 auf den Boden 5 stellen (und loslassen).

Fig. 3 stellt den ersten Schritt dieser Abfolge dar. Der Gegenstand 7 ist jetzt nicht mehr ein Kind des Tisches 4, sondern ein Kind des Greifers 3. In dem Modell wurde der Gegenstand 7 somit von dem Tisch 4 an den Greifer 3 "umgehängt".

Fig. 4 illustriert den zweiten Schritt dieser Abfolge. Der Gegenstand 7 befindet sich jetzt im Behälter 6 und ist somit ein Kind des Behälters 6. In der Baumstruktur wurde der Gegenstand 7 entsprechend umgehängt.

Fig. 5 illustriert den dritten Schritt der Abfolge. Der Greifer 3 hält jetzt den Behälter 6 (in dem sich der Gegenstand 7 befindet). Entsprechend ist jetzt der Behälter 6 ein Kind des Greifers 3 und entsprechend wurde die ganze Kette, die hier nur aus zwei Entitäten, nämlich Behälter 6 und Gegenstand 7, besteht, umgehängt.

Gemäß Fig. 6, die den vierten Schritt der Abfolge darstellt, wurde der Behälter 6 (in dem sich weiterhin der Gegenstand 7 befindet) auf dem Boden 5 abgestellt, so dass jetzt der Behälter 6 ein Kind des Bodens 5 ist, und entsprechend wurde die Kette, bestehend aus Behälter 6 und Gegenstand 7, umgehängt.

Zu jedem der in den Figuren 2 bis 5 gezeigten Zustände der Szene 1 könnte nun ein kompletter Satz an Vater-Kind-Beziehungen erstellt werden, der sämtliche Vater-Kind-Beziehungen der gezeigten Entitäten enthält. Nach Ausführungsbeispielen der vorliegenden Erfindung ist es aber nicht nötig, dass ein Programmierer alle diese Vater-Kind-Beziehungen für jeden Zustand der Szene eingibt. Es ist ausreichend, für jeden Schritt nur die eigentliche Veränderung zu spezifizieren, also zum Beispiel in der Fig. 3 das Greifen des Gegenstands 7 durch den Greifer 3, das Ablegen des Gegenstands 7 in den Behälter 6 gemäß Fig. 4 usw. Hierdurch ergibt sich eine kompakte Datenhaltung. Insbesondere müssen nicht, oder zumindest nicht notwendigerweise, Koordinaten der einzelnen Entitäten spezifiziert werden.

Ausführungsbeispiele der vorliegenden Erfindung sehen vor, dass beim erfindungsgemäßen Verfahren aufgrund der ausgeführten oder auszuführenden Aktion (beispielsweise Greifen des Gegenstands 7 in Fig. 3) und, ausgehend von einem ersten Satz von Vater-Kind-Beziehungen (der dem in den Figuren 1 und 2 gezeigten Zustand zugeordnet werden kann), ein abgeänderter, zweiter Satz von Vater-Kind-Beziehungen (automatisch) ermittelt wird, der dem in Fig. 3 gezeigten Zustand zugeordnet werden kann bzw. diesen beschreibt. Auf diese Weise kann ein Programmierer oder anderer Benutzer sich einen Überblick über den Zustand der Szene 1 verschaffen, obwohl nur wenige Daten hierfür eingegeben werden müssen. Die daraus resultierenden Vorteile sind insbesondere aus dem Übergang von der Fig. 4 auf die Fig. 5 und von der Fig. 5 auf die Fig. 6 ersichtlich. Für jeden dieser Übergänge muss nur eine Aktion spezifiziert werden (Greifen des Behälters 6 durch den Greifer 3 bzw. Ablegen des Behälters 6 auf den Boden 5), wobei sich daraus ergebende weitere Veränderungen (nämlich dass sich der Gegenstand 7, der sich in dem Behälter 6 befindet, bei diesen Aktionen mit dem Behälter mitbewegt) auf Basis des aktuellen zur Laufzeit vorhandenen Umweltmodells automatisch ermittelt werden. Die gesamte veränderte Struktur kann dann, wie in den Figuren 3 bis 6 gezeigt, auf einem Bildschirm oder ähnlichem dargestellt werden, so dass der aktualisierte Satz an Vater-Kind-Beziehungen einen Gesamtüberblick über den Zustand des Roboters 2 und seiner Umwelt erlaubt.

Ein weiterer Vorteil gegenüber dem Stand der Technik kann anhand der Figuren 2 bis 6 veranschaulicht werden. Wie oben bereits beschrieben, können durch entsprechende Anweisungen an geeigneten/relevanten Stellen in einem Programm zur Steuerung der Automatisierungsanlage Veränderungen in ein Umweltmodell übertragen werden. Nach dem Stand der Technik war es hierbei nötig, sämtliche Veränderungen einzeln zu spezifizieren (also für den Übergang von der Fig. 4 auf die Fig. 5 nicht nur das Greifen des Behälters 6 durch den Greifer 3, sondern auch die entsprechende Veränderung des Gegenstands 7, der sich in dem Behälter 6 befindet). Wenn nun gemäß dem Stand der Technik das Programm geändert wird, zum Beispiel durch Verschieben eines Programmbefehls an eine andere Stelle in dem Programm, müssen auch wieder sämtliche Änderungen der Szene entweder neu eingegeben werden oder innerhalb des Programms verschoben werden. Dies ist in der Regel umständlich und kann auch leicht übersehen werden. Im Gegensatz dazu reicht es gemäß der vorliegenden Erfindung aus, nur die eine Veränderung zu spezifizieren, und alle daraus sich ergebenden weiteren Veränderungen werden automatisch ermittelt. Entsprechendes gilt bei dem Hinzufügen oder Löschen eines Programmbefehls.

Es wird nun ein Verfahren zum Aktualisieren eines Modells einer Umwelt einer Automatisierungsanlage gemäß einem Ausführungsbeispiel der vorliegenden Erfindung näher beschrieben.

### 1. Basis-Zustand

Der Basis-Zustand oder Ausgangs-Zustand einer Szene, wie zum Beispiel der Szene 1, wird definiert. Hier kann definiert werden, welche Entitäten Teil des Modells sein sollen und wo diese sich befinden. Dies kann, wie oben beschrieben, durch Vater-Kind-Beziehungen definiert werden, die Position der Entitäten kann aber auch beispielsweise durch Koordinaten definiert werden. Nach einer Variante kann dieser Basis-Zustand einem Computer (o.ä.), der bei der Programmierung/Steuerung der Automatisierungsanlage beteiligt ist, bereits bekannt sein, so dass der Basis-Zustand nicht separat vorgegeben werden muss.

### 2. Beschreibung verschiedener Zustände

Hier kann beschrieben/definiert werden, welche verschiedenen Zustände die Szene 1 zur Laufzeit des Programms, welches die Automatisierungsanlage steuert, einnehmen kann. Das vorliegende Ausführungsbeispiel sieht vor, dass die verschiedenen Zustände wiederum durch Vater-Kind-Beziehungen definiert werden. Allerdings ist es hier nicht nötig, Vater-Kind-Beziehungen für alle Entitäten der Szene 1 zu definieren/beschreiben. Es ist ausreichend, beispielsweise nur solche Vater-Kind-Beziehungen zu beschreiben/definieren, die sich bei der Ausführung eines bestimmten Programmbefehls verändern können. So wäre es beispielsweise für den Übergang von dem in Fig. 4 gezeigten Zustand zu dem in Fig. 5 gezeigten Zustand ausreichend zu definieren, dass der Behälter 6 ein Kind des Greifers 3 wird bzw. ist. Es wäre nicht nötig zu definieren, dass der Roboter 2 (weiterhin) ein Kind des Tisches 4 ist oder dass der Gegenstand 7 (weiterhin) ein Kind des Behälters 6 ist.

### 3. Zuweisen von Vater-Kind-Beziehungen

In diesem Schritt wird den Programmbefehlen, die die (physikalische) Szene 1 verändern können, Sätze von Vater-Kind-Beziehungen zugewiesen. Diese Sätze beschreiben/definieren die Veränderungen, die durch die Ausführung eines Befehls, dem diese Sätze zugewiesen werden, verursacht werden (können). Solche Befehle sind insbesondere Bewegungsbefehle für einen Roboter, Greifer, Förderbänder usw. So würde für den Programmbefehl, der den in Fig. 5 gezeigten Zustand erwirken kann, ein Satz von Vater-Kind-Beziehungen zugewiesen, der im einfachsten Fall lediglich aus einer einzigen Vater-Kind-Beziehung besteht, nämlich einer Vater-Kind-Beziehung, die definiert, dass der Behälter 6 ein Kind des Greifers 3 ist bzw. wird.

Für andere beispielhafte Programmbefehle kann ein entsprechender Satz mehrere Vater-Kind-Beziehungen aufweisen. In den meisten Fällen wird jedoch ein Satz von Vater-Kind-Beziehungen, die einem Programmbefehl zugewiesen werden, weniger Vater-Kind-Beziehungen aufweisen als ein Satz von Vater-Kind-Beziehungen, der vollständig einen Zustand einer Szene definieren kann. Zur besseren Unterscheidung wird daher in dem verbleibenden Teil der Beschreibung ein Satz von Vater-Kind-Beziehungen, der (nur) die Veränderungen beschreibt/definiert, "Teil-Satz" genannt. Ein Satz von Vater-Kind-Beziehungen, der den Gesamtzustand einer Szene (vollständig) beschreibt/definiert, wird weiterhin "Satz" genannt. In den Ansprüchen werden unter anderem die Begriffe "erster, zweiter, dritter und vierter Satz von Vater-Kind-Beziehungen" benutzt. Auf das hier beschriebene Anwendungsbeispiel angewandt würde der erste und zweite Satz von Vater-Kind-Beziehungen (wie in den Ansprüchen benutzt) einem Satz von Vater-Kind-Beziehungen vor bzw. nach einer Veränderung entsprechen, und der vierte Satz von Vater-Kind-Beziehungen (wie in den Ansprüchen benutzt) würde, auf das hier beschriebene Ausführungsbeispiel angewandt, einem Teil-Satz von Vater-Kind-Beziehungen entsprechen. Der auch in den Ansprüchen verwendete Begriff "dritter Satz von Vater-Kind-Beziehungen" würde, auf das hier beschriebene Ausführungsbeispiel angewandt, einem Teil-Satz von Vater-Kind-Beziehungen entsprechen, der Bedingungen definiert, denen eine Szene bzw. ein Zustand eines Modells genügen muss, wie später noch weiter erläutert wird. Damit die Beschreibung noch besser im Einklang mit den Ansprüchen steht, werden in dem verbleibenden Teil der Beschreibung außerdem die Teil-Sätze (die wie oben erwähnt (nur) Veränderungen beschreiben/definieren) "dritter Teil-Satz" und "vierter Teil-Satz" genannt, obwohl im Zusammenhang mit dem hier beschriebenen Ausführungsbeispiel kein erster und zweiter Teil-Satz definiert/erwähnt wird.

### 4. Ausführen von Befehlen

Die bisher beschriebenen Teile des Ausführungsbeispiels können in gewisser Weise als Vorbereitung angesehen werden. Im vierten Schritt folgt nun eine Beschreibung dessen, was bei der Ausführung eines Befehls passiert, beispielsweise im Rahmen eines Ablaufs eines Programms, welches für die Steuerung der Automatisierungsanlage vorgesehen ist. Hierbei ist zu beachten, dass der im vierten Schritt beschriebene Vorgang zur Laufzeit des Programms stattfinden kann, aber ebenso unabhängig von einer Ausführung des Programms, also nicht unbedingt zur Laufzeit des Programms, stattfinden kann.

Ein gegebener Zustand einer Szene zu einem ersten Zeitpunkt wird also, wie oben beschrieben, durch einen Satz von Vater-Kind-Beziehungen definiert. Dieser Zustand ist somit einem Computer bekannt, der für die Steuerung einer Automatisierungsanlage benutzt wird. Bei der Ausführung eines Befehls wird nun ein Modell der Umwelt der Automatisierungsanlage aktualisiert, indem der vierte Teil-Satz von Vater-Kind-Beziehungen, der dem auszuführenden oder ausgeführten Befehl zugeordnet ist, auf den momentanen Zustand des Modells angewendet wird. Es wird also ausgehend von einem ersten Satz von Vater-Kind-Beziehungen ein neuer, abgeänderter Satz von Vater-Kind-Beziehungen ermittelt (automatisch, durch den Computer), der der Veränderung Rechnung trägt, die durch den vierten Teil-Satz von Vater-Kind-Beziehungen beschrieben/definiert wird. Dieser neue (zweite) Satz von Vater-Kind-Beziehungen kann gespeichert werden, damit er bei der Ausführung eines weiteren Befehls als Ausgangszustand benutzt werden kann. Das Verfahren kann sich dann wiederholen, so dass zu jedem Zeitpunkt der aktuelle Zustand der Szene zur Verfügung steht, d.h. das Modell wird mit der Ausführung eines jeden Befehls aktualisiert.

Das aktualisierte Modell kann von dem Computer für verschiedene Zwecke benutzt werden. Es kann aber auch einem Benutzer/Programmierer des zur Steuerung der Automatisierungsanlage benutzten Computers zur Verfügung gestellt werden, beispielsweise in visueller Form ausgegeben werden. Als Beispiel einer solchen visuellen Darstellung wird wieder auf die Baumstruktur der Figuren 2 bis 6 verwiesen. Das aktualisierte Modell kann aber auch in anderer Weise visuell oder auch nichtvisuell, beispielsweise akustisch, zur Verfügung gestellt werden.

Als Variante des vorangehend vorgestellten Ausführungsbeispiels kann gemäß einem zweiten Ausführungsbeispiel das Modell unabhängig von einer Laufzeit des oben beschriebenen Programms aktualisiert und gegebenenfalls einem Benutzer zur Verfügung gestellt werden. In diesem Fall werden die Programmbefehle nicht physikalisch durch die Automatisierungsanlage ausgeführt. Dennoch wird das Modell anhand der Programmbefehle bzw. anhand der diesen Programmbefehlen zugeordneten Teil-Sätze von Vater-Kind-Beziehungen (wiederum ausgehend von einem geltenden Satz von Vater-Kind-Beziehungen) aktualisiert. Der aktuelle Zustand kann wiederum einem Benutzer/Programmierer zur Verfügung gestellt werden, was den besonderen Vorteil hat, dass dieser einen Überblick über den (Teil-)Zustand der Szene / Umwelt erhält, der sich bei Laufzeit des Programms ergeben würde. Insbesondere können Parameter für das Tooling zur Verfügung gestellt werden, wie z.B. die oben erwähnten Lastdaten.

In einer Weiterentwicklung des ersten oder zweiten Ausführungsbeispiels werden gemäß einem dritten Ausführungsbeispiel jedem Programmbefehl zwei Teil-Sätze von Vater-Kind-Beziehung zugeordnet. Dabei beschreibt/definiert ein dritter Teil-Satz den mindestens notwendigen Zustand einer Szene, der für die Ausführung des entsprechenden Befehls notwendig ist. Der vierte Teil-Satz von Vater-Kind-Beziehungen beschreibt/definiert wiederum die durch die Ausführung des Befehls verursachte bzw. zu verursachende Veränderung der Szene. In diesem Ausführungsbeispiel wird im Zuge des oben beschriebenen vierten Schritts (Ausführung eines Befehls) durch den Computer und anhand des Modells überprüft, ob die aktuelle Szene die im dritten Teil-Satz beschriebenen/definierten Anforderungen erfüllt. So kann beispielsweise für einen erfolgreichen Übergang von dem in Fig. 3 gezeigten Zustand zu dem in Fig. 4 gezeigten Zustand vorgegeben werden, dass der Behälter 6 auf dem Tisch 4 stehen muss, damit der Roboter 2 den Gegenstand 7 in den Behälter 6 legen kann. Wenn beispielsweise der Behälter 6 entfernt worden wäre, dann könnte der Roboter 2 den Gegenstand 7 nicht in den Behälter 6 legen.

Wenn die Überprüfung zu dem Ergebnis kommt, dass die notwendigen Voraussetzungen erfüllt sind, kann der Befehl ausgeführt werden und das Modell aufgrund des vierten Teil-Satzes von Vater-Kind-Beziehungen aktualisiert werden.

Falls die Überprüfung ergibt, dass die durch den dritten Teil-Satz definierten Anforderungen nicht erfüllt sind, kann es je nach Implementierung mehrere Möglichkeiten geben. Es ist beispielsweise denkbar, dass der Computer erkennen kann, dass der dritte Teil-Satz auf die Szene angewendet werden kann, d.h. dass das Modell entsprechend dem dritten Teil-Satz aktualisiert werden kann. Dies würde in den meisten Fällen bedeuten, dass der aktuelle Zustand des Modells entsprechend dem dritten Teil-Satz verändert wird, weil erkannt wurde, dass dann das Modell zum physikalischen Zustand passt. Als weitere Möglichkeit könnte eine Fehlermeldung ausgegeben werden und/oder die Ausführung des Programms abgebrochen werden.

Als weitere Möglichkeit wäre es denkbar, dass eine Rückfrage an einen Anwender stattfindet. Dieser kann unter Umständen entscheiden, ob gemäß der ersten oder zweiten Möglichkeit fortgefahren werden soll.

Wenn das oben beschriebene Verfahren zur Laufzeit eines Programms ausgeführt wird, entspricht nach fehlerfreier Ausführung des Befehls (durch die angesprochene Aktorik) der physikalische Zustand dem vierten Teil-Satz von Vater-Kind-Beziehungen (oder sollte diesen entsprechen). Insgesamt entspricht die Szene also dem zweiten Satz von Vater-Kind-Beziehungen (oder sollte diesen entsprechen), weil die Szene durch Anwendung des vierten Teil-Satzes von dem ersten Satz in den zweiten Satz übergeht.

Optional kann mit Hilfe von Sensorik überprüft werden, ob der physikalische Zustand tatsächlich dem zweiten Satz oder dem vierten Teil-Satz entspricht. Wenn dies nicht der Fall ist, kann eine entsprechende Fehlermeldung ausgegeben werden und/oder die Ausführung des Programms abgebrochen werden.

In einer Weiterentwicklung der oben beschriebenen Ausführungsbeispiele kann gemäß einem vierten Ausführungsbeispiel folgendermaßen verfahren werden: Nachdem überprüft wurde, dass die Szene die durch den dritten Teil-Satz vorgegebenen Anforderungen erfüllt, kann ein Verriegeln der durch den dritten Teil-Satz festgelegten Eigenschaften der Szene vorgenommen werden. Dies bedeutet vorzugsweise, dass während der Befehlsausführung der im dritten Teil-Satz spezifizierte Zustand gelten muss (und nur im Rahmen der in dem vierten Teil-Satz spezifizierten Veränderungen verändert werden darf). Dies ist insbesondere dann von Bedeutung, wenn eine weitere Automatisierungsanlage, beispielsweise ein zweiter Roboter, auf die Szene 1 einwirken kann. Die Roboter können beispielsweise so arbeiten, dass der erste Roboter den Gegenstand 7 in den Behälter 6 legen kann, aber nur, solange der Behälter 6 auf dem Tisch 4 steht. Der zweite Roboter hingegen kann den Behälter 6 auf den Tisch 4 stellen oder von diesem entfernen. In diesem Beispiel kann als dritter Teil-Satz von Vater-Kind-Beziehungen vorgegeben werden, dass der Behälter 6 auf dem Tisch 4 stehen muss, damit der erste Roboter den Gegenstand 7 in den Behälter 6 legen kann. Entsprechend kann ein Verriegeln dieser Vorgabe stattfinden, d.h. nach dem Überprüfen, dass der Behälter 6 auf dem Tisch 4 steht, kann der zweite Roboter durch das Verriegeln daran gehindert werden, den Behälter 6 von dem Tisch 4 zu entfernen, damit der erste Roboter erfolgreich den Befehl ausführen kann, also den Gegenstand 7 in den Behälter 6 legen kann. Nach erfolgreichem Ausführen dieser Aktion kann die Verriegelung wieder entfernt werden.

Wie bereits angedeutet, können Ausführungsformen der vorliegenden Erfindung Vorteile gegenüber dem Stand der Technik oder gegenüber alternativen Lösungen haben. Eine Alternative zur oben beschriebenen Verwendung von Sätzen von Vater-Kind-Beziehungen wäre die Beschreibung jedes Szenen-Zustands als eine eigenständige Szene. Dies würde jedoch erstens eine relativ hohe Datenmenge verursachen und damit einen hohen Speicherbedarf haben. Zweitens würde dadurch eine Überspezifikation des für die Ausführung eines Bewegungsbefehls benötigten Zustands eintreten. Soll beispielsweise ein Roboter ein Objekt von einem Tisch mit seinem Greifer anheben, sind für diese Bewegung nur die "Ketten" von Vater-Kind-Beziehungen "Welt - Roboter - Greifer" und "Welt - Tisch - Objekt" wichtig. Dass die Szene in Wirklichkeit viele weitere Objekte enthalten kann (z.B. weitere Roboter, Objekte usw.) ist für die Ausführung der Bewegung im Allgemeinen nicht von Bedeutung und muss nicht explizit beschrieben werden. Dadurch wird ermöglicht, dass ein zweiter Roboter auf derselben Szene gleichzeitig arbeiten kann und gegebenenfalls den (physikalischen) Zustand der Szene verändern kann, ohne dass die Befehle an die Roboter sich gegenseitig blockieren. Das oben beschriebene Verriegeln kann dabei verhindern, dass sich die Roboter gegenseitig stören, so dass dadurch die Programmierung nebenläufiger Prozesse erleichtert wird.

Der oben beschriebene explizite Bezug eines Bewegungsbefehls auf einen Szenen-Zustand gibt einem Programmierer einen besseren Überblick über das Programm. So ist es möglich, beim Selektieren eines Bewegungsbefehls die dafür relevante Szene in einem 3D-Viewer darzustellen. Gleichzeitig können die in der Szene enthaltenen Objekte als Symbole zur Parametrierung des Befehls verwendet werden, indem beispielsweise ein Punkt auf dem Greifer als Bewegungsobjekt ("Motion Center") angegeben wird und ein Punkt auf dem zu greifenden Objekt als Bewegungsziel ("Target").

Nicht zuletzt kann ein Szenen-Zustand auch für die Programmierung von Punkten ("Teachen") verwendet werden. So werden in der Regel zum Handführen bei einem Leichtbauroboter die Lastdaten aller an einem Flansch des Roboters befestigten Objekte benötigt. Falls nun mehrere Zustände bezüglich dieser Objekte existieren können (indem z.B. ein Objekt im Greifer ist oder nicht), ist es normalerweise nötig, dass die Handführ-Funktionalität beim Teachen den aktuellen Zustand erfährt. Sind alle relevanten Zustände modelliert, kann ein Benutzer in einfacher Weise eine Auswahl der Zustände treffen. Wenn der Szenen-Zustand als Parameter eines Bewegungsbefehls modelliert ist, ist gegebenenfalls noch nicht einmal eine explizite Auswahl eines Zustands nötig. Stattdessen kann einfach ein Bewegungsbefehl selektiert werden und seine Parameter werden automatisch an das Handführmodul übermittelt.

Durch die Zuweisung von Szenen-Zuständen an die einzelnen Bewegungsbefehle kann das gesamte Ablaufprogramm kompakter werden. Zusammengehörige Aspekte werden gekapselt. Somit wird auch die Fehleranfälligkeit verringert, falls Veränderungen am Programm vorgenommen werden müssen. Außerdem wird die oben erwähnte Verwendung zur Programmierzeit erleichtert bzw. erst ermöglicht.

### Bezugszeichenliste

- 1: Szene (Automatisierungsanlage mit Umwelt)
- 2: Roboter (Automatisierungsanlage)
- 3: Greifer
- 4: Tisch
- 5: Boden
- 6: Behälter
- 7: Gegenstand / Objekt
- 8: Sensor

## Patentansprüche

1. Computerimplementiertes Verfahren zum Programmieren und/oder Steuern einer Automatisierungsanlage basierend auf einem Aktualisieren eines Umweltmodells einer Automatisierungsanlage,
wobei das Umweltmodell mehrere Entitäten aufweist, wobei sich der Begriff Entität auf die physikalische Welt und/oder auf eine Modellierung einer physikalischen Entität bezieht,
wobei eine der Entitäten die Automatisierungsanlage oder ein Teil der Automatisierungsanlage ist,
wobei die Entitäten verschiedene Zustände einnehmen können und somit das Umweltmodell verschiedene Zustände einnehmen kann,
wobei jeder Zustand des Umweltmodells durch einen Satz von Vater-Kind-Beziehungen der Entitäten definiert ist,
wobei eine Aktion einer der Entitäten durch eine Veränderung mindestens einer Vater-Kind-Beziehung darstellbar ist,
wobei das Verfahren zum Aktualisieren des Umweltmodells infolge einer solchen Aktion aufweist:
ausgehend von einem ersten Satz von Vater-Kind-Beziehungen des Umweltmodells, Ermitteln eines abgeänderten, zweiten Satzes von Vater-Kind-Beziehungen des Umweltmodells auf Basis der Veränderung dieser mindestens einen Vater-Kind-Beziehung, die dieser Aktion zugeordnet ist, und
Aktualisieren des Umweltmodells auf Basis des zweiten Satzes von Vater-Kind-Beziehungen,
wobei einer solchen Aktion oder mehreren solchen Aktionen oder allen solchen Aktionen jeweils mindestens ein dritter und ein vierter Satz zugeordnet ist, wobei der dritte Satz von Vater-Kind-Beziehungen Anforderungen definiert, denen das Umweltmodell genügen muss, damit die Aktion durchgeführt werden kann, und wobei der vierte Satz von Vater-Kind-Beziehungen einen Zustand des Umweltmodells nach Durchführen der Aktion definiert,
wobei vor dem Aktualisieren des Umweltmodells überprüft wird, ob der Zustand des Umweltmodells dem dritten Satz von Vater-Kind-Beziehungen genügt, und
wobei das Verfahren während eines Programmierens der Automatisierungsanlage ausgeführt wird und wobei das Ausführen der Aktion ein Übermitteln des Zustands von der Entität an eine Steuerung umfasst;
oder
wobei das Verfahren während einer Laufzeit der Automatisierungsanlage ausgeführt wird und wobei das Ausführen der Aktion ein Übermitteln des Zustands von der Entität an eine Steuerung umfasst.

2. Verfahren nach Anspruch 1, wobei zumindest eine Aktion einen Bewegungsablauf, ein Greifen, ein Loslassen oder sonstiges Aktivieren einer der Entitäten aufweist.

3. Verfahren nach einem der vorhergehenden Ansprüche, wobei das Umweltmodell anhand des vierten Satzes von Vater-Kind-Beziehungen, nach der Ausführung der Aktion, aktualisiert wird, wenn das Überprüfen ergibt, dass der Zustand des Umweltmodells dem dritten Satz von Vater-Kind-Beziehungen genügt.

4. Verfahren nach einem der vorhergehenden Ansprüche, wobei eine Fehlermeldung ausgegeben wird und/oder das Aktualisieren des Umweltmodells anhand des vierten Satzes von Vater-Kind-Beziehungen verhindert wird, wenn das Überprüfen ergibt, dass der Zustand des Umweltmodells dem dritten Satz von Vater-Kind-Beziehungen nicht genügt.

5. Verfahren nach einem der vorhergehenden Ansprüche, ferner aufweisend:
Überprüfen, mithilfe von Sensorik, ob der physikalische Zustand der Automatisierungsanlage und/oder der Umwelt dem vierten Satz von Vater-Kind-Beziehungen entspricht.

6. Verfahren nach einem der vorhergehenden Ansprüche, ferner aufweisend:
Verriegeln der durch den dritten Satz vorgegebenen Vater-Kind-Beziehungen, sodass durch das Verriegeln sichergestellt wird, dass wenigstens eine weitere Automatisierungsanlage die durch den dritten Satz von Vater-Kind-Beziehungen vorgegebenen Vater-Kind-Beziehungen während des Ausführens eines Befehls durch die Automatisierungsanlage nicht ändern kann.

7. Verfahren nach einem der vorhergehenden Ansprüche, wobei die Automatisierungsanlage und die wenigstens eine weitere Automatisierungsanlage zumindest teilweise unabhängig voneinander, insbesondere im Wesentlichen unabhängig voneinander betrieben werden können.

8. Verfahren nach einem der vorhergehenden Ansprüche, wobei die Aktion infolge eines Befehls an die Automatisierungsanlage ausgeführt wird.

9. Verfahren nach einem der vorhergehenden Ansprüche, ferner aufweisend:
Visualisieren des Umweltmodells und/oder der Entitäten, insbesondere durch eine Baumstruktur und/oder eine Darstellung der Position der Entitäten, insbesondere eine räumliche Darstellung.

10. Computerprogrammprodukt mit einem Programmcode, der auf einem von einem Computer lesbaren Medium gespeichert ist, zur Durchführung eines Verfahrens nach einem der Ansprüche 1 bis 9.

11. System zum Aktualisieren eines Umweltmodells einer Automatisierungsanlage mit Mitteln zur Durchführung eines Verfahrens nach einem der Ansprüche 1 bis 9.

## Claims

1. A computer-implemented method for programming and/or controlling an automation system based on updating an environmental model of an automation system,
wherein the environmental model comprises a plurality of entities, wherein the term entity refers to the physical world and/or to a modeling of a physical entity,
wherein one of the entities is the automation system or a part of the automation system,
wherein the entities can assume different states and thus the environmental model can assume different states,
wherein each state of the environmental model is defined by a set of parent-child relationships of the entities,
wherein an action of one of the entities can be represented by a change in at least one parent-child relationship,
wherein the method for updating the environmental model as a result of such an action comprises:
starting from a first set of parent-child relationships of the environmental model, determining a modified, second set of parent-child relationships of the environmental model based on the change in said at least one parent-child relationship associated with said action, and
updating the environmental model based on the second set of parent-child relationships,
wherein at least a third and a fourth set are respectively associated with such an action or several such actions or all such actions, wherein the third set of parent-child relationships defines requirements that the environmental model must satisfy in order for the action to be performed, and wherein the fourth set of parent-child relationships defines a state of the environmental model after the action has been performed,
wherein, prior to updating the environmental model, it is verified whether the state of the environmental model satisfies the third set of parent-child relationships, and wherein the method is executed during programming of the automation system and wherein executing the action comprises transmitting the state from the entity to a controller;
or
wherein the method is executed during a runtime of the automation system, and wherein executing the action comprises transmitting the state from the entity to a controller.

2. The method according to claim 1, wherein at least one action comprises a motion sequence, a grasping, a releasing, or other activation of one of the entities.

3. The method according to any of the preceding claims, wherein the environmental model is updated based on the fourth set of parent-child relationships after the execution of the action if the checking determines that the state of the environmental model satisfies the third set of parent-child relationships.

4. The method according to any of the preceding claims, wherein an error message is output and/or the updating of the environmental model based on the fourth set of parent-child relationships is prevented if the check reveals that the state of the environmental model does not satisfy the third set of parent-child relationships.

5. The method according to any of the preceding claims, further comprising:
checking, using sensors, whether the physical state of the automation system and/or the environment corresponds to the fourth set of parent-child relationships.

6. The method according to any of the preceding claims, further comprising:
locking the parent-child relationships specified by the third set, such that the locking ensures that at least one additional automation system cannot change the parent-child relationships specified by the third set of parent-child relationships while the automation system is executing a command.

7. The method according to any of the preceding claims, wherein the automation system and the at least one other automation system can be operated at least partially independently of one another, in particular substantially independently of one another.

8. The method according to any of the preceding claims, wherein the action is performed in response to a command to the automation system.

9. The method according to any of the preceding claims, further comprising:
visualizing the environmental model and/or the entities, in particular by means of a tree structure and/or a representation of the entities' positions, in particular a spatial representation.

10. A computer program product comprising program code stored on a computer-readable medium for carrying out a method according to any one of claims 1 to 9.

11. A system for updating an environmental model of an automation system, comprising means for carrying out a method according to any one of claims 1 to 9.

## Revendications

1. Procédé mis en œuvre par ordinateur pour programmer et/ou commander une installation d'automatisation sur la base d'une mise à jour d'un modèle d'un environnement d'une installation d'automatisation,
dans lequel le modèle d'environnement présente plusieurs entités, dans lequel le terme entité fait référence au monde physique et/ou à une modélisation d'une entité physique,
dans lequel l'une des entités est l'installation d'automatisation ou une partie de l'installation d'automatisation,
dans lequel les entités peuvent prendre des états différents et ainsi le modèle d'environnement peut prendre différents états,
dans lequel chaque état du modèle d'environnement est défini par un ensemble de relations parent-enfant des entités,
dans lequel une action de l'une des entités peut être représentée par un changement d'au moins une relation parent-enfant,
dans lequel le procédé de mise à jour du modèle d'environnement suite à une telle action présente :
en partant d'un premier ensemble de relations parent-enfant du modèle d'environnement, la détermination d'un deuxième ensemble modifié de relations parent-enfant du modèle d'environnement sur la base du changement de ladite au moins une relation parent-enfant, qui est associée à ladite action, et
la mise à jour du modèle d'environnement sur la base du deuxième ensemble de relations parent-enfant,
dans lequel au moins un troisième et un quatrième ensemble de relations parent-enfant sont respectivement associés à une telle action ou à plusieurs actions de ce type ou à toutes les actions de ce type, dans lequel le troisième ensemble de relations parent-enfant définit des exigences auxquelles le modèle d'environnement doit satisfaire pour que l'action puisse être réalisée, et dans lequel le quatrième ensemble de relations parent-enfant définit un état du modèle d'environnement après la réalisation de l'action,
dans lequel, avant la mise à jour du modèle d'environnement, il est vérifié si l'état du modèle d'environnement satisfait au troisième ensemble de relations parent-enfant, et
dans lequel le procédé est exécuté pendant une programmation de l'installation d'automatisation et dans lequel l'exécution de l'action comprend une transmission de l'état de l'entité à une commande ;
ou
dans lequel le procédé est exécuté pendant un temps de fonctionnement de l'installation d'automatisation et dans lequel l'exécution de l'action comprend une transmission de l'état de l'entité à une commande.

2. Procédé selon la revendication 1, dans lequel au moins une action présente une séquence de mouvements, une préhension, une libération ou toute autre activation de l'une des entités.

3. Procédé selon l'une quelconque des revendications précédentes, dans lequel le modèle d'environnement est mis à jour à l'aide du quatrième ensemble de relations parent-enfant, après l'exécution de l'action, lorsque la vérification révèle que l'état du modèle d'environnement satisfait au troisième ensemble de relations parent-enfant.

4. Procédé selon l'une quelconque des revendications précédentes, dans lequel un message d'erreur est émis et/ou la mise à jour du modèle d'environnement à l'aide du quatrième ensemble de relations parent-enfant est empêchée lorsque la vérification révèle que l'état du modèle d'environnement ne satisfait pas au troisième ensemble de relations parent-enfant.

5. Procédé selon l'une quelconque des revendications précédentes, présentant en outre :
la vérification, à l'aide de capteurs, si l'état physique de l'installation d'automatisation et/ou de l'environnement correspondent au quatrième ensemble de relations parent-enfant.

6. Procédé selon l'une quelconque des revendications précédentes, présentant en outre :
le verrouillage des relations parent-enfant spécifiées par le troisième ensemble, si bien que le verrouillage permet d'assurer qu'au moins une autre installation d'automatisation ne peut pas modifier les relations parent-enfant spécifiées par le troisième ensemble de relations parent-enfant pendant l'exécution d'une instruction par l'installation d'automatisation.

7. Procédé selon l'une quelconque des revendications précédentes, dans lequel l'installation d'automatisation et l'au moins une autre installation d'automatisation peuvent fonctionner au moins en partie indépendamment l'une de l'autre, en particulier sensiblement indépendamment l'une de l'autre.

8. Procédé selon l'une quelconque des revendications précédentes, dans lequel l'action est exécutée suite à une instruction adressée à l'installation d'automatisation.

9. Procédé selon l'une quelconque des revendications précédentes, présentant en outre :
la visualisation du modèle d'environnement et/ou des entités, en particulier par une arborescence et/ou une représentation de la position des entités, en particulier une représentation spatiale.

10. Produit-programme d'ordinateur avec un code de programme qui est stocké sur un support lisible par un ordinateur pour réaliser un procédé selon l'une quelconque des revendications 1 à 9.

11. Système de mise à jour d'un modèle d'environnement d'une installation d'automatisation avec des moyens de réalisation d'un procédé selon l'une quelconque des revendications 1 à 9.
